# EUROPÄISCHE PATENTANMELDUNG

(11) **EP 3 360 706 A1**
(43) Veröffentlichungstag der Anmeldung: **15.08.2018**
(21) Anmeldenummer: 18155324.9
(22) Anmeldetag: 06.02.2018
(51) Int. Cl.: B60G 9/00, B62D 21/11, B62D 53/08

(54) **ACHSAUFNAHMERAHMEN FÜR NUTZFAHRZEUGE MIT EINER RAHMENBASIS UND WENIGSTENS ABSCHNITTSWEISE INTEGRAL UND FÜGEVERBINDUNGSFREI MIT DER RAHMENBASIS ZUSAMMENHÄNGENDEN LAGERBÖCKEN**

(30) Priorität: 08.02.2017 DE 102017201998
(71) Anmelder: JOST-Werke Deutschland GmbH, 63263 Neu-Isenburg (DE)
(72) Erfinder: Knook, Ruud, 5613 KN Eindhoven (NL); Dobbelaar, Jos, 5445 PA Landhorst (NL)
(74) Vertreter: RLTG

(57) **Zusammenfassung**

Ein Achsaufnahmerahmen (10) zur drehbaren Aufnahme einer Starrachse (12) an einem Fahrzeugrahmen, der Achsaufnahmerahmen (10) umfassend:
- eine Rahmenbasis (18) mit einer Drehlagerformation und
- wenigstens ein an der Rahmenbasis (18) vorgesehener Lagerbock (34) zur Lagerung eines Längslenkers (28, 30) der Starrachse (12) oder/und oder einer Federanordnung (42) einer Federung der Starrachse (12),
ist dadurch gekennzeichnet, dass ein Abschnitt des wenigstens einen Lagerbocks (34) integral und fügeverbindungsfrei mit der Rahmenbasis (18) verbunden ist.

## Beschreibung

Die vorliegende Anmeldung betrifft einen Achsaufnahmerahmen zur drehbaren Aufnahme einer Starrachse an einem Fahrzeugrahmen, wobei der Achsaufnahmerahmen umfasst:
- eine Rahmenbasis mit einer Drehlagerformation und
- wenigstens ein an der Rahmenbasis vorgesehener Lagerbock zur Lagerung eines Längslenkers der Starrachse oder/und einer Federanordnung einer Federung der Starrachse.

Solche Achsaufnahmerahmen werden zur Bildung von Drehschemeln an Nutzfahrzeugen verwendet, wobei der Achsaufnahmerahmen im fertig montierten Zustand mit der dann am Achsaufnahmerahmen gelagerten Starrachse um eine Gierachse des den Achsaufnahmerahmen tragenden Fahrzeugs drehbar ist. Solche Drehschemel-Achsanordnungen können beispielsweise an Anhängern vorgesehen sein, welche über eine Deichsel mit einem Zugfahrzeug verbindbar sind. Die Deichsel kann mit dem Achsaufnahmerahmen verbunden sein, um eine lenkbare Achse am Anhänger bereitzustellen, auf die ein Lenkmoment vom Zugfahrzeug über die Deichsel ausgeübt werden kann.

Drehschemel-Achsaufnahmen sind außerdem von Auflieger-Nachlauffahrzeugen bekannt, etwa wenn ein mit einem solchen Auflieger gebildeter Zug eine erhöhte Rangierfähigkeit aufweisen soll.

Die Rahmenbasis, welche sich im fertig an ein Fahrzeug anmontierten Zustand in der Regel parallel zum Aufstandsuntergrund des Fahrzeugs erstreckt, trägt die Drehlagerformation, welche eine üblicherweise um die Gierachse drehbare Anbindung des Achsaufnahmerahmens an den Fahrzeugrahmen des Fahrzeugs ermöglicht.

Im Stand der Technik ist die Rahmenbasis eine Platte oder ein Gestell, an welche bzw. welches Lagerböcke anmontiert, in der Regel angeschweißt werden, um mithilfe der Lagerböcke eine Starrachse am Achsaufnahmerahmen zu lagern. Die Lagerböcke stehen dabei nach deren Anbringung an die mehr oder weniger plattenförmige Rahmenbasis im Wesentlichen orthogonal von dieser ab.

Es ist Aufgabe der vorliegenden Erfindung, den Montageaufwand zur Herstellung eines Achsaufnahmerahmens bei gleichzeitiger Erhöhung der Standfestigkeit des Achsaufnahmerahmens zu verringern.

Diese Aufgabe wird erfindungsgemäß gelöst durch einen gattungsgemäßen Achsaufnahmerahmen, bei welchem ein Abschnitt des wenigstens einen Lagerbocks integral und fügeverbindungsfrei mit der Rahmenbasis verbunden ist.

Durch die integrale und fügeverbindungsfreie Ausbildung eines Abschnitts des wenigstens einen Lagerbocks gemeinsam mit der Rahmenbasis ist zum einen für diesen integral und fügeverbindungsfrei mit der Rahmenbasis verbundenen und ausgebildeten Abschnitt kein Fügeaufwand zu leisten. Überdies ist durch Wegfall beispielsweise einer Schweißverbindung ein Gefüge des in der Regel aus Stahl oder unter Verwendung von Stahl gebildeten Achsaufnahmerahmens weniger gestört als durch eine Schweißverbindung, was die Standfestigkeit des Achsaufnahmerahmens erhöht.

Der wenigstens eine Lagerbock weist in der Regel eine C-förmige Querschnittsgestalt auf, wobei die beiden parallelen Schenkel zwischen sich einen Lagerabschnitt des Längslenkers oder/und einen Lagerabschnitt der Federanordnung aufnehmen. In der Regel sind die Lagerabschnitte von Längslenker oder/und Federanordnung um eine Schwenkachse schwenkbar zwischen den Schenkeln des Lagerbocks aufgenommen. Um einen Lagerabschnitt des Längslenkers oder/und einen Lagerabschnitt der Federanordnung auch am erfindungsgemäßen Achsaufnahmerahmen in bekannter Weise lagern, insbesondere um eine Schwenkachse schwenkbar lagern zu können, ist gemäß einer vorteilhaften Weiterbildung der vorliegenden Erfindung vorgesehen, dass der wenigstens eine Lagerbock zwei mit Abstand voneinander vorgesehene Seitenwände umfasst, welche dazu ausgebildet sind, zwischen sich einen Lagerabschnitt des Längslenkers oder/und einen Lagerabschnitt der Federanordnung aufzunehmen. Weiter umfasst der wenigstens eine Lagerbock eine sich zwischen den Seitenwänden erstreckende Stirnwand, welche integral und fügeverbindungsfrei als der wenigstens eine oben genannte Abschnitt mit der Rahmenbasis ausgebildet ist.

Die integrale und fügeverbindungsfreie Ausbildung von Teilen des wenigstens einen Lagerbocks einerseits und der Rahmenbasis andererseits wird bevorzugt dadurch erreicht, dass die Rahmenbasis ein Metallblech umfasst, von welchem wenigstens ein Blechbereich durch Biegen zu dem wenigstens einen Abschnitt des wenigstens einen Lagerbocks umgeformt wird. In diesem Falle ist der biegeumgeformte Blechbereich ein integral und fügeverbindungsfrei mit der Rahmenbasis verbundener Abschnitt des wenigstens einen Lagerbocks. Bevorzugt bildet der durch Biegeumformen eines Blechs erhaltene Abschnitt des wenigstens einen Lagerbocks eine Stirnwand desselben, welche in einem Bezugszustand - d. h. mit fertig an einen Fahrzeugrahmen anmontiertem Achsaufnahmerahmen mit daran aufgenommener Starrachse und hergerichtet für eine Geradeaus-Vorwärtsfahrt - in Fahrzeuglängsrichtung weist, bevorzugt als vorauseilende Stirnwand zur Fahrzeugvorderseite weist. Durch die fügeverbindungsfreie Gestalt des insbesondere biegeumgeformten Rahmenteils wird ein steifes Bauteil ohne Montage von ursprünglich gesondert ausgebildeten Versteifungsbauteilen erhalten.

In dem definierten Bezugszustand eines den erfindungsgemäßen Achsaufnahmerahmen tragenden Fahrzeugs sind der Längslenker oder/und die Federanordnung der Starrachse an dem Lagerbock bevorzugt um eine in Fahrzeugquerrichtung (Nickachse) verlaufende Schwenkachse schwenkbar am Lagerbock aufgenommen, um der Starrachse eine Beweglichkeit längs der Fahrzeuggierachse zu ermöglichen. Die Seitenwände weisen daher bevorzugt überwiegend oder ausschließlich in Fahrzeugquerrichtung.

Auf der von der Stirnwand gegenüberliegenden Seite des Lagerbocks ist der von Rahmenbasis, Seitenwänden und Stirnwand des Lagerbocks umgebene Raum bevorzugt offen, um den Längslenker oder/und die Federanordnung zur Lagerung durch den Lagerbock in den vom Lagerbock umgebenen Aufnahmeraum einführen zu können.

In der Regel sind Starrachsen spiegelsymmetrisch zu einer Spiegelsymmetrieachse ausgestaltet, welche orthogonal zu den durch die Starrachse definierten Raddrehachsen orientiert ist. Daher weist eine Starrachse üblicherweise wenigstens zwei Längslenker auf, sodass es vorteilhaft ist, wenn an der Rahmenbasis zwei Lagerböcke mit Abstand voneinander ausgebildet sind, wobei von jedem der beiden Lagerböcke ein Abschnitt integral und fügeverbindungsfrei mit der Rahmenbasis verbunden ist. Somit kann für jeden Längslenker einer Starrachse sowie für jede von mehreren mit der Starrachse zu ihrer Federung zusammenwirkenden Federanordnung ein Lagerbock am Achsaufnahmerahmen vorgesehen sein.

Der Abstand der Lagerböcke voneinander ist bei Betrachtung im Bezugszustand im Wesentlichen ein in Fahrzeugquerrichtung zu messender Abstand. Da die Lagerböcke im Betrieb des Achsaufnahmerahmens mechanisch in etwa gleich belastet werden, ist es vorteilhaft, sie konstruktiv im Wesentlichen identisch auszubilden. Hierzu kann vorgesehen sein, dass jeder der zwei Lagerböcke zwei mit Abstand voneinander vorgesehene Seitenwänden umfasst, welche jeweils dazu ausgebildet sind, zwischen sich einen Lagerabschnitt des Längslenkers oder und einen Lagerabschnitt der Federanordnung aufzunehmen, wobei mit der Rahmenbasis ein Wandabschnitt integral und fügeverbindungsfrei verbunden ist, welcher je eine Stirnwand der beiden Lagerböcke bildet.

Der integral und fügeverbindungsfrei mit der Rahmenbasis verbundene Wandabschnitt, welcher insbesondere durch Biegen eines Blechbereichs der Rahmenbasis erzeugt wurde, bildet somit in unterschiedlichen Wandabschnittsbereichen je eine Stirnwand der beiden Lagerböcke.

Grundsätzlich kann im Übrigen auch daran gedacht sein, wenigstens eine der beiden Seitenwände eines Lagerbocks durch Biegen eines integral und fügeverbindungsfrei mit der Rahmenbasis zusammenhängenden Blechabschnitts zu bilden, jedoch könnte dies zu einem unerwünscht hohen Maß an Verschnitt führen. Es ist daher bevorzugt, die Seitenwände eines Lagerbocks schweißtechnisch mit der Rahmenbasis zu verbinden.

In dem Fall, dass eine Seitenwand eines Lagerbocks durch Umbiegen eines integral mit der Rahmenbasis zusammenhängenden Blechbereichs gebildet wird, ist dies die im Bezugszustand des Achsaufnahmerahmens die axial weiter außen liegende Seitenwand des Lagerbocks.

"Axial" bezieht sich dabei auf die Verlaufsrichtung der durch die Starrachse definierten kollinearen Raddrehachsen.

Grundsätzlich kann daran gedacht sein, dass sich der die Stirnwände der beiden Lagerböcke bildende Wandabschnitt nur im Bereich der Stirnwände von einem der Drehlagerformation nähergelegenen Abschnitt der Rahmenbasis weg erstreckt. Eine vorteilhafte Aussteifung des gesamten Achsaufnahmerahmens kann jedoch dadurch erzielt werden, dass sich der Wandabschnitt auch zwischen den Stirnwänden der beiden Lagerböcke erstreckt und diese integral und fügeverbindungsfrei miteinander verbindet. Der Wandabschnitt erstreckt sich daher bevorzugt über die gesamte axiale Breite des Achsaufnahmerahmens.

Eine weitere Steifigkeitserhöhung des gesamten Achsaufnahmerahmens kann dadurch erreicht werden, dass der Wandabschnitt die Seitenwände wenigstens eines Lagerbocks, vorzugsweise beider Lagerböcke, auf derjenigen Seite umgreift, welche von dem der Drehlagerformation nähergelegenen Abschnitt der Rahmenbasis fern liegt bzw. abgewandt ist. Dies gilt insbesondere dann, wenn sich auch der die Seitenwände der Lagerböcke umgreifende Teil des Wandabschnitts über die gesamte axiale Breite des Achsaufnahmerahmens erstreckt.

Da in der Regel, wie oben bereits geschildert, die vom Achsaufnahmerahmen aufzunehmende Starrachse bezüglich einer im Bezugszustand sowohl zur Fahrzeuggierachse als auch zur Fahrzeuglängsachse parallele Spiegelsymmetrieebene spiegelbildlich ausgebildet ist, sind bevorzugt auch die beiden Lagerböcke bezüglich einer zwischen ihnen verlaufenden Spiegelsymmetrieebene spiegelbildlich vorgesehen und ausgebildet. Dies führt zu einer spiegelbildlichen dynamischen Kraftrückwirkung der Achslagerung auf die Lagerböcke und auf den Achsaufnahmerahmen, sodass im Betrieb durch die Lagerung der Achse am Achsaufnahmerahmen auftretende Kräfte im Wesentlichen spiegelsymmetrisch über die Betriebsdauer am Achsaufnahmerahmen auftreten.

Zur Erleichterung der drehbaren Anbindung des Achsaufnahmerahmens an einen Fahrzeugrahmen und weiter zur Vermeidung unnötiger Bauraumbeanspruchung durch den Achsaufnahmerahmen, weist die Rahmenbasis bevorzugt einen wenigstens abschnittsweise ebenen Basisabschnitt auf. Bevorzugt ist in diesem Basisabschnitt die Drehlagerformation vorgesehen. Im Bereich der Drehlagerformation weist die Rahmenbasis bevorzugt eine den Basisabschnitt durchsetzende Durchgangsöffnung auf, durch welche hindurch die der Starrachse zugewandte Seite der Rahmenbasis von der dem Fahrzeugrahmen zugewandten Seite der Rahmenbasis erreichbar ist und umgekehrt.

Bevorzugt weist die Rahmenbasis eine Mehrzahl ebener oder/und um parallele Krümmungsachsen gekrümmte Bereiche auf, von welchen unmittelbar benachbarte ebene oder(und gekrümmte Bereiche jeweils um zueinander parallele Biegekanten abgewinkelt sind. Im Falle von gekrümmten Rahmenbasisbereichen sind deren Krümmungsachsen bevorzugt parallel zu den Biegekanten. Somit kann die Rahmenbasis einschließlich des oben genannten Wandabschnitts und des gegebenenfalls die Seitenwände umgreifenden Abschnitts aus einem einzigen ursprünglich ebenen Metallblech durch Biegen hergestellt sein.

Bevorzugt weist die Rahmenbasis Flächenbereiche auf, welche zur Anbringung von Luftfedern ausgebildet sind, an welchen die aufzunehmende Starrachse in an sich bekannter Weise über Federträger abgestützt werden kann.

Die genannte Drehlagerformation ist vorzugsweise ein an sich bekannter Drehkranz, wie er bei Drehschemel-Achsaufnahmerahmen zum Einsatz kommt.

Die vorliegende Erfindung wird nachfolgend anhand der beiliegenden Figuren näher erläutert. Es stellt dar:
- Figur 1: eine perspektivische Ansicht einer erfindungsgemäßen Ausführungsform eines Achsaufnahmerahmens der vorliegenden Anmeldung mit daran aufgenommener Starrachse,
- Figur 2: eine Seitenansicht (axiale Ansicht) des Achsaufnahmerahmens mit Starrachse bei Betrachtung längs des Pfeils II in Figur 1,
- Figur 3: eine Vorderansicht des Achsaufnahmerahmens mit daran aufgenommener Starrachse der Figuren 1 und 2 bei Betrachtung in Richtung des Pfeils III von Figur 2 und
- Figur 4: eine Unteransicht der Baugruppe aus Achsaufnahmerahmen und daran aufgenommener Starrachse längs des Pfeils IV von Figur 3.

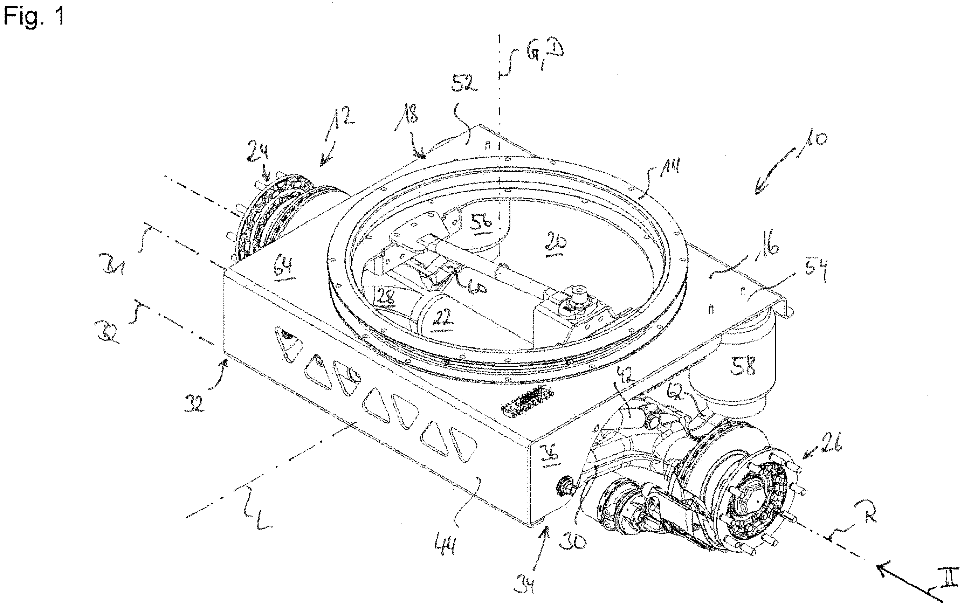

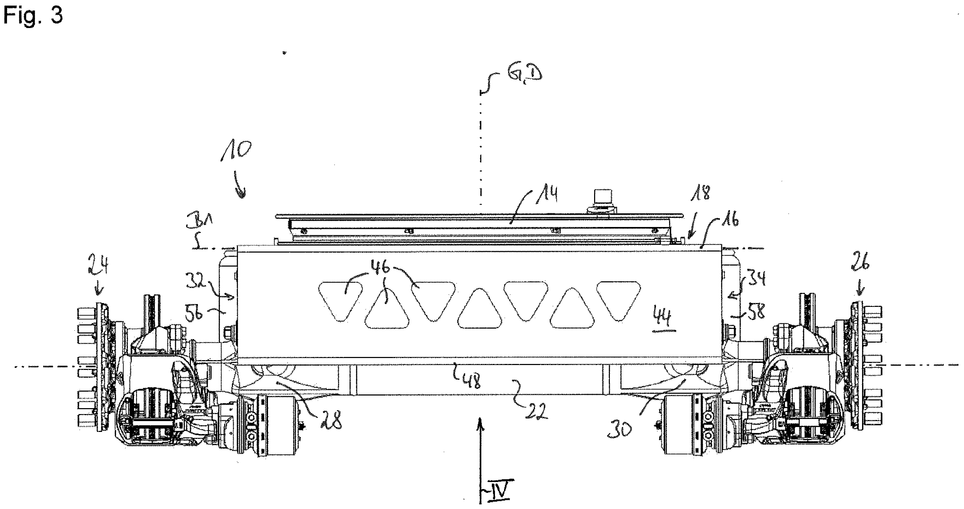

Eine erfindungsgemäße Ausführungsform eines Achsaufnahmerahmens 10 mit daran aufgenommener Starrachse 12 wird nachfolgend anhand der Figuren 1 bis 4 beschrieben werden.

Der Achsaufnahmerahmen 10 dient dazu, die Starrachse 12 federnd zu lagern und um eine zur Gierachse G eines Fahrzeugs parallele Drehachse D drehbar an einem in den Figuren 1 bis 4 nicht dargestellten Fahrzeugrahmen aufzunehmen. Hierzu weist der Achsaufnahmerahmen 10 einen an sich bekannten Drehkranz 14 auf, weleher an einem ebenen Abschnitt 16 einer Rahmenbasis 18 vorgesehen ist. Im radial vom Drehkranz 14 eingefassten Bereich weist der ebene Bereich 16 der Rahmenbasis 18 eine Öffnung 20 auf, welche die Rahmenbasis 18 vollständig durchsetzt.

Durch die Öffnung 20 hindurch ist in Figur 1 ein Achskörper 22 der Starrachse 12 erkennbar.

An ihren jeweiligen axialen Endbereichen weist die Starrachse 12 je eine Radnabe 24 bzw. 26 auf, an welche in an sich bekannter Weise eine nicht dargestellte Felge eines ebenfalls nicht dargestellten Fahrzeugrads zur gemeinsamen Drehung mit der Radnabe angeflanscht werden kann.

Die Radnaben 24 und 26 definieren je eine Raddrehachse R, welche als kollineare Raddrehachsen in der vorliegenden Anmeldung eine axiale Richtung zur Beschreibung des Achsaufnahmerahmens 10 definiert.

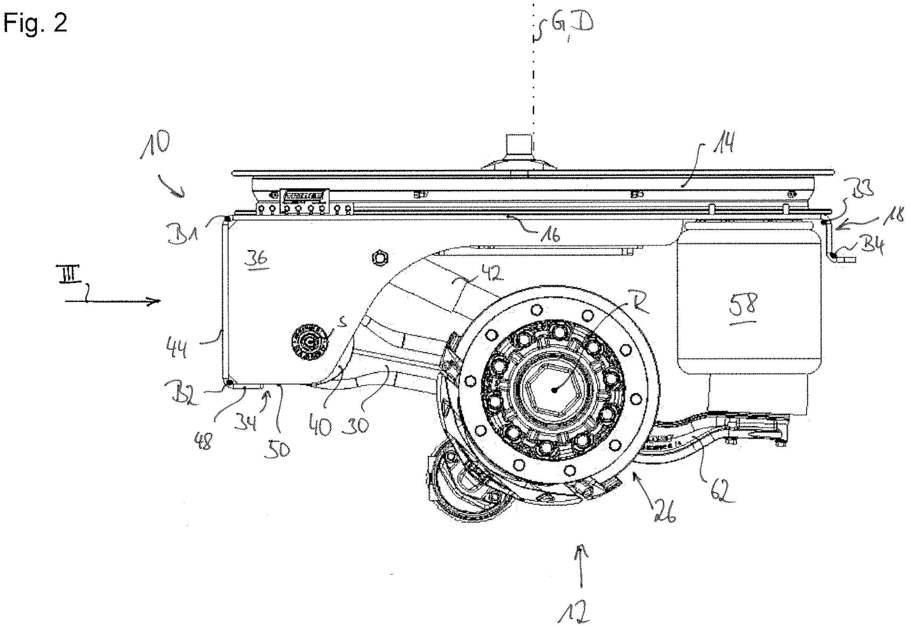

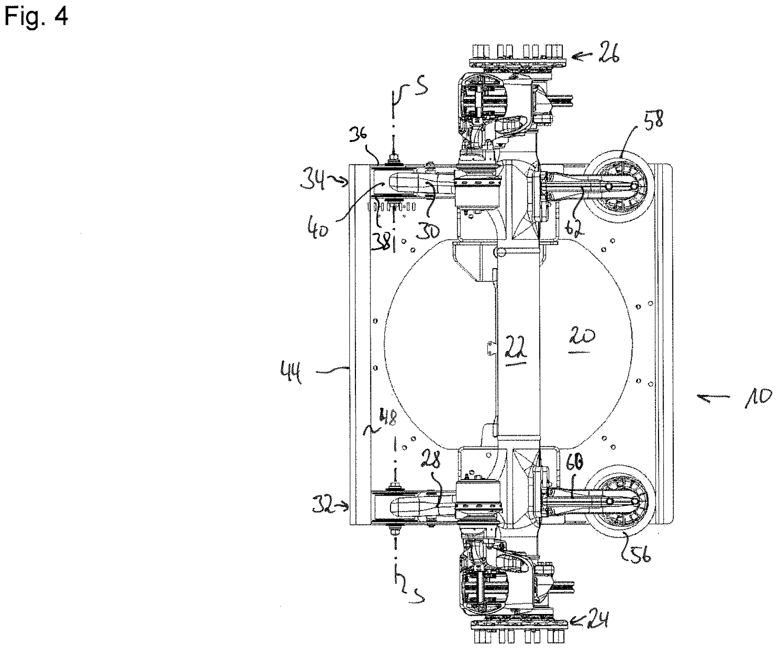

Wie insbesondere in den Figuren 2 und 4 zu erkennen ist, weist die Starrachse 12 Längslenker 28 und 30 auf, welche um eine zur Raddrehachse R parallele Schwenkachse S schwenkbar in fest mit der Rahmenbasis 18 verbundenen Lagerböcken 32 und 34 gelagert sind. Die Lagerböcke 32 und 34 sind bezüglich einer die Drehachse D enthaltende und zur Raddrehachse R orthogonalen Symmetrieebene spiegelsymmetrisch ausgebildet, sodass nachfolgend lediglich der in einer Mehrzahl von Figuren besser erkennbare Lagerbock 34 beschrieben wird und dessen Beschreibung unter Anwendung der genannten Symmetriebedingung auch zur Beschreibung des Lagerbocks 32 heranzuziehen ist.

Der Lagerbock 34 weist zwei zueinander parallele Seitenwände 36 und 38 auf, welche zwischen sich ein Befestigungsauge 40 als ein Lagerabschnitt des Längslenkers 30 aufnehmen. Außerdem ist eine Federanordnung 42, welche einenends an der Starrachse abgestützt ist, mit ihrem entgegengesetzten Lagerabschnitt ebenfalls zwischen den Seitenwänden 36 und 38 am Lagerbock 34 angelenkt.

Die an ihrer zur Starrachse 12 weisenden Seite offenen Lagerböcke 32 und 34 sind in einer im fertig montierten Zustand bei Geradeausfahrt-Stellung längs der Fahrzeuglängsachse L weisenden Richtung durch einen Wandabschnitt 44 begrenzt, welcher integral und fügeverbindungsfrei mit dem ebenen Abschnitt 16 des Rahmenabschnitts 18 zusammenhängt. Der Wandabschnitt 44 wurde vorliegend durch Biegeumformung eines Metallblechs und genauer durch Abwinkeln bezüglich des ebenen Abschnitts 16 um eine zur Raddrehachse R parallele Biegeachse B1 gebildet.

An seinen axialen Endbereichen bildet der Wandabschnitt 44 je eine Stirnwand der Lagerböcke 32 und 34, welche sich beispielsweise im Falle des Lagerbocks 34 zwischen den Seitenwänden 36 und 38 in axialer Richtung erstreckt. Die Stirnwände der Lagerböcke 32 und 34 sind mittels des Wandabschnitts 44 integral miteinander verbunden, sodass der Wandabschnitt 44, welcher sich bevorzugt über die gesamte axiale Breite des Achsaufnahmerahmens 10 erstreckt, dem Achsaufnahmerahmen 10 eine erhöhte Steifigkeit verleiht. Zur Gewichtseinsparung können im Wandabschnitt 44 Ausnehmungen 46 vorgesehen sein, welche bevorzugt zwischen sich fachwerkartig verlaufende Streben definieren. Bevorzugt sind die Ausnehmungen daher dreieckig, wobei in axialer Richtung aufeinander unmittelbar folgende Ausnehmungen 46 jeweils um 180° relativ zueinander verdreht ausgebildet sind.

Bevorzugt hängt mit dem Wandabschnitt 44 ebenfalls integral und fügeverbindungsfrei ein Umgriffsabschnitt 48 zusammen, welcher sich ebenfalls bevorzugt über die gesamte axiale Breite des Achsaufnahmerahmens 10 erstreckt und welcher die Seitenwände 36 und 38 des Lagerbocks 34 (ebenso wie die entsprechenden Seitenwände des Lagerbocks 32) an ihrer vom ebenen Bereich 16 der Rahmenbasis 18 fernliegenden Bereich 50 umgreift. Dies erhöht die Steifigkeit des Achsaufnahmerahmens noch weiter.

Bevorzugt ist der Umgriffsabschnitt 48 durch Biegen eines Blechbereichs um eine zur Radachse R und zur Biegeachse B1 parallele Biegeachse B2 bezüglich des Wandabschnitts 44 gebildet worden.

An seinem den Wandabschnitt 44 aufweisenden Längsende weist der Achsaufnahmerahmen daher bei Betrachtung in axialer Richtung bevorzugt eine C-förmige Kontur auf. Dabei bilden der ebene Bereich 16 der Rahmenbasis 18 und der Umgriffsbereich 48 die parallelen Schenkel und der Wandabschnitt 44 die die Schenkel verbindende Basis der C-förmigen Gestalt.

Ebenso bilden die Lagerböcke 32 und 34 eine C-förmige Gestalt, allerdings bei Betrachtung der Unteransicht von Figur 4. Hier bilden die Seitenwände der Lagerböcke die Schenkel und die jeweiligen Stirnwände die Basis der C-förmigen Gestalt. Somit wird eine hochsteife Lagerung der Starrachse 12 am Achsaufnahmerahmen 10 ermöglicht.

Wenngleich die axial weiter außen liegenden Seitenwände, wie beispielsweise die Seitenwand 36, ebenfalls durch Biegeumformung aus einem ursprünglich ebenen Metallblech gebildet sein können, ist die schweißtechnische Verbindung der Seitenwände 36 mit der Rahmenbasis 18 bevorzugt, um unerwünschten Verschnitt zu vermeiden.

An ihrem bezüglich des Achskörpers 22 dem Wandabschnitt 44 entgegengesetzten Längsende sind an der Rahmenbasis 18, insbesondere im ebenen Bereich 16 derselben, bevorzugt in beiden axialen Endbereichen je ein Anbringungsabschnitt 52 und 54 zur Anbringung von Luftfedern 56 und 58 ausgebildet, mittels welcher die Starrachse 12 über entsprechende Federträger 60 und 62 federnd am Achsaufnahmerahmen 10 abgestützt sein können.

Somit kann der Achsaufnahmerahmen 10 ohne weitere Bauteile eine Starrachse 12 vollständig betriebsbereit aufnehmen und lagern.

Die Anbringungsbereiche 52 und 54, welche für die Anbringung der Luftfedern 56 und 58 ausgebildet sind, können beispielsweise Durchstecköffnungen aufweisen, durch welche hindurch Gewindestangen der Luftfedern 56 und 58 geführt und durch entsprechende Gegenmittel, wie etwa Muttern, festgelegt werden können.

Das die Rahmenbasis 18 bildende oder zu ihrer Bildung wenigstens beitragende Blechbauteil 64, welches den ebenen Bereich 16, den Wandabschnitt 44 und den Umgriffsabschnitt 48 aufweist, kann über die genannten Abschnitte hinaus noch weitere gekröpfte Abschnitte aufweisen, etwa im Bereich der Luftfedern 56 bzw. 58, um dem Achsaufnahmerahmen eine möglichst hohe Steifigkeit zu verleihen. Bevorzugt sind diese Kröpfungen wiederum durch Biegebearbeitung um zueinander und zu den Biegeachsen B1 und B2 parallele Biegeachsen B3 und B4 (siehe Figur 2) gebildet, bevorzugt in wechselndem Biegesinn.

Vorliegend wurde ein Achsaufnahmerahmen mit abschnittsweise integrierten Lagerböcken 32 und 34 zur betriebsbereiten Aufnahme von Längslenkern 28 und 30 sowie von Federanordnungen 42 vorgestellt. Über die integrierte Bauweise hinaus ist der Achsaufnahmerahmen mit weniger Schweißnähten versehen, was - verglichen mit einer gebauten (geschweißten) Lösung - eine geringere Gefügebeeinflussung bedeutet. Darüber hinaus ist der Achsaufnahmerahmen aufgrund seiner Biegebearbeitung hochsteif ausgebildet.

## Patentansprüche

1. Achsaufnahmerahmen (10) zur drehbaren Aufnahme einer Starrachse (12) an einem Fahrzeugrahmen, der Achsaufnahmerahmen (10) umfassend:
- eine Rahmenbasis (18) mit einer Drehlagerformation (14) und
- wenigstens ein an der Rahmenbasis (18) vorgesehener Lagerbock (32, 34) zur Lagerung eines Längslenkers (28, 30) der Starrachse (12) oder/und einer Federanordnung (42) einer Federung der Starrachse (12),
**dadurch gekennzeichnet, dass** ein Abschnitt des wenigstens einen Lagerbocks (32, 34) integral und fügeverbindungsfrei mit der Rahmenbasis (18) verbunden ist.

2. Achsaufnahmerahmen (10) nach Anspruch 1,
**dadurch gekennzeichnet, dass** der wenigstens eine Lagerbock (32, 34) zwei mit Abstand voneinander vorgesehene Seitenwände (36, 38) umfasst, welche dazu ausgebildet sind, zwischen sich einen Lagerabschnitt (40) des Längslenkers (28, 30) oder/und einen Lagerabschnitt der Federanordnung (42) aufzunehmen, und wobei der wenigstens eine Lagerbock (32, 34) eine sich zwischen den Seitenwänden (36, 38) erstreckende Stirnwand umfasst, wobei die Stirnwand integral und fügeverbindungsfrei mit der Rahmenbasis (18) ausgebildet ist.

3. Achsaufnahmerahmen (10) nach Anspruch 1 oder 2,
**dadurch gekennzeichnet, dass** an der Rahmenbasis (18) zwei Lagerböcke (32, 34) mit Abstand voneinander ausgebildet sind, wobei von jedem der beiden Lagerböcke (32, 34) ein Abschnitt integral und fügeverbindungsfrei mit der Rahmenbasis (18) verbunden ist.

4. Achsaufnahmerahmen (10) nach Anspruch 3,
**dadurch gekennzeichnet, dass** jeder der zwei Lagerböcke (32, 34) zwei mit Abstand voneinander vorgesehene Seitenwände (36, 38) umfasst, welche jeweils dazu ausgebildet sind, zwischen sich einen Lagerabschnitt (40) des Längslenkers (28, 30) oder und einen Lagerabschnitt der Federanordnung (42) aufzunehmen, wobei mit der Rahmenbasis (18) ein Wandabschnitt (44) integral und fügeverbindungsfrei verbunden ist, welcher je eine Stirnwand der beiden Lagerböcke (32, 34) bildet.

5. Achsaufnahmerahmen (10) nach Anspruch 4,
**dadurch gekennzeichnet, dass** sich der Wandabschnitt (44) auch zwischen den Stirnwänden der beiden Lagerböcke (32, 34) erstreckt und diese integral und fügeverbindungsfrei miteinander verbindet.

6. Achsaufnahmerahmen (10) nach einem der Ansprüche 3 bis 5,
**dadurch gekennzeichnet, dass** der Wandabschnitt (44) die Seitenwände (36, 38) wenigstens eines Lagerbocks (32, 34), vorzugsweise beider Lagerböcke (32, 34), auf der von der Rahmenbasis (18) fernliegenden Seite (50) umgreift.

7. Achsaufnahmerahmen (10) nach einem der Ansprüche 3 bis 6,
**dadurch gekennzeichnet, dass** die beiden Lagerböcke (32, 34) bezüglich einer zwischen ihnen verlaufenden Spiegelsymmetrieebene spiegelbildlich vorgesehen und ausgebildet sind.

8. Achsaufnahmerahmen (10) nach einem der vorhergehenden Ansprüche,
**dadurch gekennzeichnet, dass** die Rahmenbasis (18) einen wenigstens abschnittsweise ebenen Basisabschnitt (16) aufweist.

9. Achsaufnahmerahmen (10) nach einem der vorhergehenden Ansprüche,
**dadurch gekennzeichnet, dass** die Drehlagerformation (14) ein Drehkranz (14) ist.

10. Achsaufnahmerahmen (10) nach einem der vorhergehenden Ansprüche mit einer daran aufgenommenen Starrachse (12).
